# EUROPÄISCHE PATENTSCHRIFT

(11) **EP 0 887 684 B1**
(45) Veröffentlichungstag und Bekanntmachung des Hinweises auf die Patenterteilung: **10.03.2004**
(21) Anmeldenummer: 98109050.9
(22) Anmeldetag: 19.05.1998
(51) Int. Cl.: G02C 7/04

(54) **Anpassverfahren für eine Kontaktlinse und Messlinse zur Durchführung des Verfahrens**
Method for fitting a contact lens and measuring lens for carrying out the method
Méthode pour adapter une lentille de contact et lentille de mesure pour la mise en oeuvre de la méthode

(30) Priorität: 25.06.1997 DE 19726888
(43) Veröffentlichungstag der Anmeldung: 30.12.1998
(73) Patentinhaber: Wöhlk Contact-Linsen GmbH, 24232 Schönkirchen (DE)
(72) Erfinder: Malchow, Volker, 24105 Kiel (DE); Rothe, Eckhard, 24232 Schönkirchen (DE); Grimmenstein, Klaus, 24232 Schönkirchen (DE)
(74) Vertreter: Hamm, Volker, Dr.

(56) Entgegenhaltungen:
- EP-A- 0 346 032
- EP-A- 0 452 549
- WO-A-94/17435
- WO-A-95/25981
- US-A- 4 268 133
- BARON H.: 'Kontaktlinsen' VERLAG OPTISCHE FACHVERöFFENTLICHUNGEN GMBH HEIDELBERG 1991, Seiten 812 - 813

## Beschreibung

Die Erfindung betrifft ein Anpaßverfahren für eine multifokale Kontaktlinse auf einem menschlichen Auge, wobei die Geometrie des Augapfels für die Rückflächengeometrie und die benötigten optischen Korrekturen für die Fern- und Nahsicht des zu korrigierenden Auges ermittelt werden und eine Meßlinse zur Durchführung dieses Anpaßverfahrens.

Die bisher bekannten Anpaßverfahren für Kontaktlinsen, insbesondere multifokale Kontaktlinsen, beschränkten sich darauf, die Geometrie des Augapfels für die Rückflächengeometrie der benötigten Kontaktlinse und die benötigten optischen Korrekturen für die Fern- und Nahsicht des zu korrigierenden Auges zu ermitteln.

Nachteilig an den klassischen Anpaßverfahren ist, daß die Augengeometrie (insbesondere die Stellung der Augenlider in geöffnetem Zustand) und die Bewegung des Augapfels mit der Pupille bei dem Übergang von Fern- auf Nahsicht bei der Datenermittlung nicht erfolgt.

Es ist die Aufgabe der Erfindung ein Anpaßverfahren zu entwickeln, welches für den Einsatz von Kontaktlinsen, welche bei ihrer Verwendung auf dem Auge eines Kontaktlinsenträgers eine stabile Lage haben müssen, eine sichere Anpassung der Kontaktlinse ermöglicht.

Diese Aufgabe wird durch den kennzeichnenden Teil des ersten Patentanspruches gelöst. Die zur Lösung der Aufgabe notwendige Meßlinse ist im Anspruch 10 offenbart.

Das erfindungsgemäße Anpaßverfahren für eine Kontaktlinse auf einem menschlichen Auge, wobei die Geometrie des Augapfels für die Rückflächengeometrie und die benötigten optischen Korrekturen für die Fern- und Nahsicht des zu korrigierenden Auges ermittelt werden; dient vorzugsweise zur Anpassung einer lagestabilisierten multifokale Kontaktlinse.

Dabei erfolgt zumindest eine zusätzliche Anpassungsmessung durch Mittel zur Ermittlung der Relativbewegung der Pupille des betreffenden Auges, auf welches die spätere Kontaktlinse aufgesetzt werden soll, relativ zu einem Bezugssystem an oder auf dem Auge. Das Bezugssystem kann dabei durchaus das Augenunterlid oder ein anderes markantes Merkmal nahe dem Auge oder auf diesem aufgesetzt sein. Wenn man diese Daten hat, kann man auch den Verlauf der Sichtzonen auf der lagestabilisierten multifokale Kontaktlinse für den jeweiligen Kontaktlinsenträger individuell sicher festlegen.

Das Bezugssystem kann insbesondere auch durch eine auf das betreffende Auge aufgesetzten Meßlinse gegeben sein und zur Ermittlung der Relativbewegung der Pupille des betreffenden Auges, auf welches die spätere Kontaktlinse aufgesetzt werden soll, die Pupillenbewegung relativ zur Meßlinse bzw. zur Oberfläche der Meßlinse erfaßt werden.

Die Mittel zur Ermittlung der Relativbewegung der Pupille des betreffenden Auges relativ zur Oberfläche der Meßlinse können dabei auf der Meßlinse so angebracht sein, daß der spätere Träger der Kontaktlinse z.B. durch Farbeindrücke dem Anpasser entsprechende Angaben macht.

Diese Mittel zur Ermittlung der Relativbewegung der Pupille des betreffenden Auges relativ zur Oberfläche der Meßlinse auf dem menschlichen Auge können aber auch auf der Meßlinse so angebracht sein, daß der Anpasser insbesondere mit einem geeigneten Beobachtungsgerät, vorzugsweise einem Spaltlampenmikroskop, das entsprechende Auge beobachten kann.

Vorzugsweise sollte eine Aufzeichnungseinrichtungen, vorzugsweise mit einer Fotokamera und/oder einer Videokamera, am Beobachtungsgerät angebracht sein, wobei die gewonnenen Daten aufgenommen und falls erwünscht dargestellt und/oder gespeichert werden.

Es ist vorteilhaft, wenn dabei die Pupillenpositionen für Nahund Fernsicht und/oder (ggf. gleichzeitig vorteilhafterweise) der Pupillendurchmesser bei bestimmten Lichtverhältnissen bezogen auf die Oberfläche der Meßlinse bestimmt werden. Um Meßfehler auszuschließen ist es vorteilhaft, wenn diese Meßdaten vorzugsweise elektronisch ermittelt werden.

Desweiteren ist es vorteilhaft, wenn die Pupillenpositionen für Nah- und Fernsicht und/oder ggf. gleichzeitig der Pupillendurchmesser bei bestimmten Lichtverhältnissen bezogen auf die Oberfläche der Meßlinse zur Festlegung der Größe von Nah- und Fernteil verwendet werden. Auch hier ist es vorteilhaft, wenn diese Festlegung elektronisch erfolgt, um Meßfehler auszuschließen.

Außerdem ist es vorteilhaft, wenn die Pupillenpositionen für Nah- und Fernsicht und/oder ggf. gleichzeitig der Pupillendurchmesser bei bestimmten Lichtverhältnissen bezogen auf die Oberfläche der Meßlinse zur Ermittlung des Verlaufs der Trennlinie verwendet werden. Aus den bereits dargelegten Gründen sollte vorzugsweise auch diese Ermittlung elektronisch erfolgen.

Die zur Durchführung des erfindungsgemäßen Anpaßverfahrens benötigte erfindungsgemäße Meßlinse besitzt einen im wesentlichen sphärischen Linsenkörper, welcher eine im wesentlichen konvexe äußere Oberfläche und eine im wesentlichen konkave innere Oberfläche aufweist. Die Meßlinse dient dabei vorzugsweise für die Anpassung von multifokalen Kontaktlinsen. Um die Lage der Pupille relativ zur Meßlinse leichter verfolgen zu können, sind auf der Meßlinse Mittel zur Ermittlung der Relativbewegung einer menschlichen Pupille relativ zur Oberfläche der Meßlinse angebracht 3a. Diese Mittel können dabei immer oder nur unter bestimmten Umständen (z.B. Fluoreszenz) mit dem bloßen Auge sichtbar sein.

In der EP 0 346 032-A1 wird beispielsweise eine Kontaktlinse offenbart, die horizontale oder vertikale Liniensegmente auf der Oberfläche der Linse aufweist, die die Ermittlung der Relativbewegung der Pupille relativ zur Oberfläche der Messlinse ermöglichen. Die erfindungsgemäßen Messlinsen weisen jedoch zusätzliche Mittel auf der Oberfläche der Linse auf, die die Ermittlung der Relativbewegung einer menschlichen Pupille relativ zur Oberfläche der Messlinse beim Wechsel von Fern- zu Nahsicht ermöglichen. Dabei können diese Mittel zur Ermittlung der Relativbewegung einer menschlichen Pupille relativ zur Oberfläche der Meßlinse 4a vorteilhafterweise als Gravuren auf bzw. an der Meßlinse ausgeführt sein.

Die Mittel zur Ermittlung der Relativbewegung einer menschlichen Pupille relativ zur Oberfläche der Meßlinse 4a können aber auch vorzugsweise als Farbeinlagen im Material des Linsenkörpers der Meßlinse ausgeführt sein.

Die Mittel zur Ermittlung der Relativbewegung einer menschlichen Pupille relativ zur Oberfläche der Meßlinse 4a könnten desweiteren vorzugsweise als Farbauflagen auf der konvexen äußeren Oberfläche ausgeführt sein.

Die Verwendung von konzentrischen Kreisen als Mittel zur Ermittlung der Relativbewegung einer menschlichen Pupille relativ zur Oberfläche der Meßlinse 4a ist als vorteilhaft anzusehen.

Auch die Verwendung von Fadenkreuzen, wie sie aus dem Stand der Technik insbesondere bei Zielfernrohren bestens bekannt sind, eignet sich als Mittel zur Ermittlung der Relativbewegung einer menschlichen Pupille relativ zur Oberfläche der Meßlinse 4a, wobei die Verwendung von einem oder mehrerer Fadenkreuze und von einem oder mehrerer (z.B. konzentrischer) Ringe einander nicht ausschließt. Zur Feststellung von starken Rotationen (∼90°, ∼180° oder ∼270°) können ein oder mehrere Striche unterschiedlich gestaltet sein (z.B. verschiedene Länge aufweisen, Doppelstrich, etc.).

Bei der Verwendung von Meßringen auf bzw. an der Meßlinse 4b hat es sich als vorteilhaft erwiesen, wenn auf der Meßlinse mehr als drei Ringe mit Mittelpunkt im optischen Zentralpunkt angebracht sind, welche zueinander einen Abstand zwischen 0,5 mm und 2 mm haben. beim Wechsel von Fern- zu Nachsicht als Mittel zur Ermittlung der Relativbewegung einer menschlichen Pupille relativ zur Oberfläche der Messlinse beim Wechsel von Fern- zu Nahsicht.

Wenn auf der Meßlinse eine Nummer aus Zahlen und/oder Buchstaben und/oder Zeichen angebracht ist, so können diese Zahlen und/oder Buchstaben und/oder Zeichen eine Winkelermittlung erleichtern und zwar sehr einfach, wenn der Winkelabstand zwischen den Zahlen und/oder Buchstaben und/oder Zeichen der Nummer definiert ist (d.h. festgelegt, wobei ein gleich großer Abstand die geringsten Schwierigkeiten bei der Anpassung erzeugt).

Legt man den Winkelabstand zwischen den Zahlen und/oder Buchstaben und/oder Zeichen der Nummer fest, so sollte dieser im Winkelbereich zwischen 5° und 20° liegen.

Es ist vorteilhaft, wenn auf der Meßlinse ein der Größe der Nummern angepaßtes Pluszeichen angeordnet ist und wenn dieses Pluszeichen Teil der Nummer (welche z.B. eine Identnummer sein kann) ist.

Die Meßlinse sollte eine sphärisch konzentrische Optik mit einem Durchmesser von mindestens 5 mm haben, damit eine sichere Messung erfolgen kann.

Vorteilhafterweise ist auf oder an der Meßlinse eine Lagestabilisierung angebracht, welche die Meßlinse relativ zum Augenunterlid des die Meßlinse tragenden Patienten in einer stabilen Lage hält. Dies erleichtert den Meßvorgang, da sonst ggf. die Meßlinse zwischen dem Meßvorgang für die Ermittlung der Pupille bei Nahsicht und dem Meßvorgang für die Ermittlung der Pupille bei Fernsicht dauernd beobachtet werden muß.

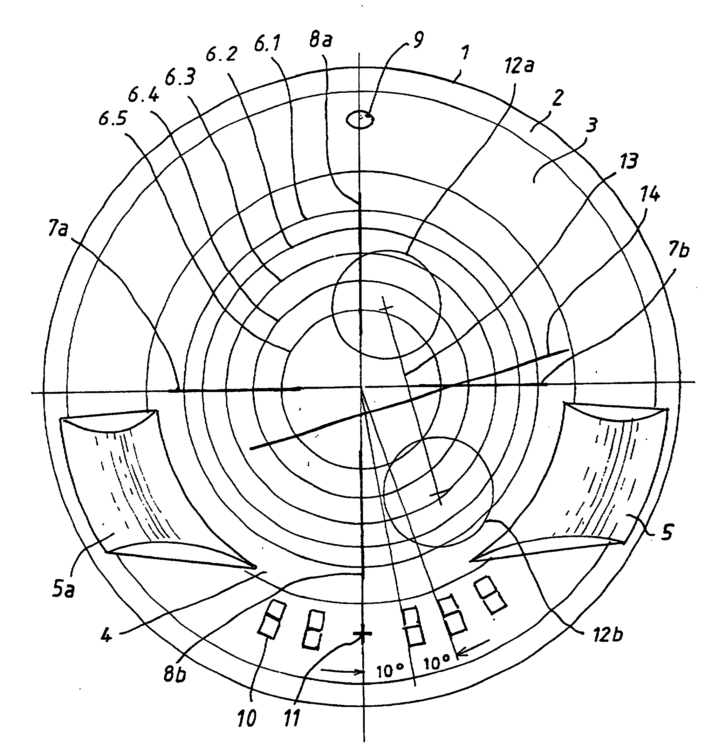

Die Erfindung wird im folgenden anhand eines Ausführungsbeispieles, unter Bezugnahme auf die beiliegende einzige Figur, näher erläutert, wobei das nachfolgende Beispiel keinen abschließenden Charakter für die Erfindung hat und weitere vorteilhafte Ausgestaltungen der Erfindung beinhaltet.

Es zeigt die einzige Figur eine erfindungsgemäße Meßlinse, wie sie zur Durchführung des erfindungsgemäßen Verfahrens benötigt wird.

Die in der Figur dargestellte Meßlinse (1) ist eine auf das Auge aufzusetzende Kontaktlinse mit Lagestabilisierung.

Diese Kontaktlinse (1) besitzt einen Randbereich (2), einen Linsenaußenbereich (3) und eine optische Zone (4). Auf dem Linsenaußenbereich (3) sind verdickte Bereiche (5, 5a) angeordnet, welche für eine Lagestabilisierung der Kontaktlinse (1) im eingesetzten Zustand auf dem Auge des Kontaktlinsenträgers sorgen. Dabei liegen die Unterkanten der verdickten Bereiche (5, 5a) auf dem Augenlid des Auges zumindest punktförmig leicht auf, auf welchem die spätere multifokale Kontaktlinse getragen werden soll.

Diese Art der Lagestabilisierung ist in der EP 0 452 549 eingehend beschrieben. Alle dort gemachten Angaben gelten auch für die hier im Beispiel exemplarisch verwendete Meßlinse (1).

In der optischen Zone (4) besitzt die Kontaktlinse (1) fünf konzentrische Ringe (6.1, 6.2, 6.3, 6.4, 6.5) sowie horizontale (7a, 7b) und vertikale Markierungen (8a, 8b) in Form von geraden Strichen.

Im Linsenaußenbereich (3) ist außerdem im oberen Bereich ein Farbpunkt (9) angeordnet, wobei der obere Bereich der Bereich ist, welcher bei dem normalen Tragezustand der Kontaktlinse (1) oben ist. Dieser soll das lagerichtige Einsetzen der Kontaktlinse (1) auf dem Auge sicherstellen.

Desweiteren besitzt die Kontaktlinse (1) Kennzeichnungen (10) und zumindest eine Markierung (11) (vorzugsweise im unteren Bereich der Kontaktlinse (1)) auf dem an sich leeren Linsenaußenbereich (3). Die Markierung (11) befindet sich dabei in der vertikalen Verlängerung der vertikalen Markierungen (8a, 8b).

In der Figur ist auch die Pupille (12a, 12b) des menschlichen Auges in verschiedenen Positionen (Nah- und Fernsichtstellung) dargestellt. In der Position (12a) befindet sich die Pupille, wenn der Träger der Meßlinse (1) in die Ferne schaut. In der Position (12b) befindet sich die Pupille, wenn der Kontaktlinsenträger in die Nähe schaut.

Zwischen den Mittelpunkten der Pupille (12a, 12b) ist noch eine Verbindungsgerade (13) eingezeichnet, sowie die zu dieser Verbindungsgeraden (13) senkrechte Linie (14). Der Schnittpunkt der beiden Linien (13, 14) liegt genau in der mittleren Entfernung zwischen den beiden Pupillenpositionen (12a, 12b) für die Fern- und die Nahsicht.

Die Anpaßlinse ist mit einer sphärischen konzentrischen optischen Zone (4) von 9,5 mm Durchmesser ausgerüstet. Ferner besitzt sie eine Lagestabilisierung wie oben beschrieben.

Im Bereich der optischen Zone (4) sind die konzentrischen Ringe (6.1, 6.2, 6.3, 6.4, 6.5) als Gravur ausgeführt, und bestehen in dem hier dargestellten Beispiel aus fünf konzentrischen Ringen (6.1, 6.2, 6.3, 6.4, 6.5), beginnend bei einem Durchmesser von 3 mm in 1 mm Abstand zueinander. Vertikal- und Horizontalgravuren (7a, 7b; 8a, 8b) teilen die optische Zone (3) der Meßlinse (1) in vier Quadrate.

Die Zeichen der Gravur (10) (welche z.B. eine Identnummer sein kann) sind im festen Abstand (von 10°) zueinander angeordnet, wobei das Pluszeichen (11) genau in der Vertikalen liegt.

Hierdurch läßt sich eine Drehung der Meßlinse (1) auf dem Auge von ± 20° ermitteln. Bei der Verwendung derartiger Meßlinsen (1) kommt man mit 4-8 unterschiedlichen Linsen aus, welche zwei unterschiedliche Durchmesser haben müssen, um die meisten Augen von Kontaktlinsenträger ausmessen zu können.

Das Wirkungsprinzip läßt sich wie folgt beschreiben: Bei Anpassung einer Multifokal- bzw. einer Bifokallinse ist es erforderlich, die Relativbewegung der Pupille des Auges zu ermitteln.

Diese Relativbewegung muß nun auf ein Bezugssystem bezogen werden. wenngleich ein Bezug auf z.B. das Augenunterlid möglich ist, so erleichtert der Einsatz einer Meßlinse (1) die Messung doch ganz erheblich. Die Meßlinse (1) wird durch die Lagestabilisierung gewissermaßen geführt auf dem Augenunterlid gehalten und erlaubt Messungen in Abhängigkeit von der Blickbewegung.

Die Lage der Anpaß- oder Meßlinse (1) relativ zur Pupille (12a, 12b) kann mit einem Beobachtungsgerät (in der Figur nicht dargestellt) (z.B. einem Spaltlampen-Mikroskop) beobachtet werden. Die Messung kann aber auch, ggf. zusätzlich mit einer Aufzeichnungseinrichtung (in der Figur nicht dargestellt) (z.B. einer Fotokamera oder einer Videokamera) aufgezeichnet werden.

Bei der Anpaßmessung erfolgt eine erste Meßwertermittlung bei Blick nach unten (wie beim Lesen) sowie eine zweite Meßwertermittlung bei einem entspannten leicht nach oben gerichteter Blick (Fernsicht).

Die beiden jeweiligen Pupillenposition (12a, 12b) lassen sich dabei bezogen auf die vier Quadrate der optischen Zone (4), welche durch die vertikalen und horizontalen Markierungen (7a, 7b; 8a, 8b) gegeben sind, sowie der konzentrischen Ringe (6.1, 6.2, 6.3, 6.4, 6.5) ermitteln. Das Ergebnis erlaubt dann die Festlegung der Größe von Nah- bzw. Fernteil und die Ermittlung des Verlaufs der Trennlinie zwischen den Sehbereichen. Diese Festlegung bzw. Ermittlung kann auch mit geeigneter Bildauswertesoftware elektronisch erfolgen, wodurch Meßfehler des Anpassers vermieden werden können.

Da die Pupille (12a, 12b) sich bei der Blickänderung von Fernzur Nahsicht nicht exakt vertikal bewegt, die Trennlinie bzw. Übergangslinie zwischen Nah- und Fernteil aber senkrecht zur Bewegungsrichtung der Multifokal- bzw. Bifokallinse stehen sollte, wird diese Trenn- bzw. Übergangslinie für die rechte und linke anzupassende Kontaktlinse im Normalfall unter einem Winkel von bis zu ± 30° von der Horizontalen abweichen (die Winkel der Trenn- bzw. Übergangslinien verlaufen dabei im wesentlichen meist gespiegelt zur Vertikalen).

Im Prinzip eignen sich alle bekannten Kontaktlinsen mit und ohne Lagestabilisierung als Meßlinsen, solange auf ihnen Mittel zur Ermittlung der Relativbewegung einer menschlichen Pupille relativ zur Oberfläche der Meßlinse angebracht sind. Nachteilig bei Kontaktlinsen ohne Lagestabilisierung ist dabei, daß die Linsenposition dann nur mit einer Bildauswertungssoftware nach dem Blickwechsel von Nah- auf Fernsicht oder umgekehrt korrigiert werden muß.

Im Prinzip ist auch jede Lagestabilisierung einer Kontaktlinse zur Verwendung als Meßlinse geeignet, wobei aber bei den instabileren Lagestabilisierungen auch hier eine Korrektur durch eine Bildauswertungssoftware nach dem Blickwechsel von Nah- auf Fernsicht oder umgekehrt erfolgen muß.

Als Mittel zur Ermittlung der Relativbewegung der Pupille relativ zu einem Bezugssystem auf dem oder an dem Auge beim Wechsel von Fern- zu Nahsicht können alle aus dem Stand der Technik hierfür geeignete Mittel verwendet werden. Auch hier sind die obigen Angaben nur exemplarisch anzusehen.

## Patentansprüche

1. Anpassverfahren für eine Kontaktlinse auf einem menschlichen Auge, wobei die Geometrie des Augapfels für die Rückflächengeometrie und die benötigten optischen Korrekturen für die Fern- und Nahsicht des zu korrigierenden Auges ermittelt werden,
**dadurch gekennzeichnet, dass** die Anpassmessung für die anzupassende Kontaktlinse zusätzlich mit Mitteln erfolgt, welche die Messung der Bewegung der Pupille relativ zu einem Bezugssystem auf oder an dem Auge ermöglichen, welches sich infolge des Wechsels von Fern- zu Nahsicht relativ zur Pupille bewegt.

2. Anpaßverfahren nach Anspruch 1, **dadurch gekennzeichnet, daß** das Bezugssystem durch eine auf das betreffende Auge aufgesetzte Meßlinse gegeben ist und daß zur Ermittlung der Relativbewegung der Pupille des betreffenden Auges, auf welches die spätere Kontaktlinse aufgesetzt werden soll, die Pupillenbewegung relativ zur Meßlinse bzw. zur Oberfläche der Meßlinse erfaßt wird.

3. Anpaßverfahren nach Anspruch 2, **dadurch gekennzeichnet, daß** die Relativbewegung der Pupille des betreffenden Auges relativ zur Meßlinse mit einem geeigneten Beobachtungsgerät, vorzugsweise einem Spaltlampenmikroskop, beobachtet und/oder mit einer Aufzeichnungseinrichtung, vorzugsweise mit einer Fotokamera und/oder einer Videokamera, aufgenommen und/oder dargestellt und/oder gespeichert wird.

4. Anpaßverfahren nach Anspruch 2 oder 3, **dadurch gekennzeichnet, daß** die Meßdaten der Pupillenpositionen für Nahund Fernsicht und/oder die Meßdaten der Pupillendurchmesser bei bestimmten Lichtverhältnissen bezogen auf die Oberfläche der Meßlinse bestimmt werden.

5. Anpaßverfahren nach Anspruch 4, **dadurch gekennzeichnet, daß** vorzugsweise diese Meßdaten elektronisch ermittelt werden.

6. Anpaßverfahren nach Anspruch 4 oder 5, **dadurch gekennzeichnet, daß** die Pupillenpositionen für Nah- und Fernsicht und/oder der Pupillendurchmesser bei bestimmten Lichtverhältnissen bezogen auf die Oberfläche der Meßlinse zur Festlegung der Größe von Nah- und Fernteil verwendet werden.

7. Anpaßverfahren nach Anspruch 6, **dadurch gekennzeichnet, daß** diese Festlegung elektronisch erfolgt.

8. Anpaßverfahren nach einem der Ansprüche 3 bis 7, **dadurch gekennzeichnet, daß** die Pupillenpositionen für Nah- und Fernsicht und/oder der Pupillendurchmesser bei bestimmten Lichtverhältnissen bezogen auf die Oberfläche der Meßlinse zur Ermittlung des Verlaufs der Trennlinie verwendet werden.

9. Anpaßverfahren nach Anspruch 8, **dadurch gekennzeichnet, daß** diese Ermittlung elektronisch erfolgt.

10. Messlinse mit einem im wesentlichen sphärischen Linsenkörper, welcher eine im wesentlichen konvexe äußere Oberfläche und eine im wesentlichen konkave innere Oberfläche aufweist, vorzugsweise für die Anpassung von multifokalen Kontaktlinsen, wobei zur Ermittlung der Relativbewegung einer menschlichen Pupille relativ zur Oberfläche der Messlinse auf der Oberfläche der Messlinse mehr als drei konzentrische Ringe (6.1-6.5) mit Mittelpunkt im optischen Zentralpunkt angebracht sind, die zueinander einen Abstand zwischen 0,5 mm und 2 mm haben.

11. Messlinse nach Anspruch 10,
**dadurch gekennzeichnet, dass** die konzentrischen Ringe als Gravuren oder Farbeinlagen ausgeführt sind.

12. Verwendung der Messlinse nach Anspruch 10 oder 11 für die Anpassung von multifokalen Kontaktlinsen.

## Claims

1. Process for fitting a contact lens on a human eye, wherein the geometry of the eyeball is determined for the back surface geometry and the necessary optical corrections are determined for the distance vision and near vision of the eye which is to be corrected, **characterised in that** the fitting measurement for the contact lens to be fitted is additionally carried out with means which permit measurement of the movement of the pupil relative to a reference system on or at the eye, which moves relative to the pupil as a result of the change from distance vision to near vision.

2. Fitting process as claimed in claim 1, **characterised in that** the reference system is provided by a measuring lens placed on the eye concerned and that in order to determine the relative movement of the pupil of the eye concerned, on which the subsequent contact lens is to be placed, the pupil movement relative to the measuring lens or to the surface of the measuring lens is detected.

3. Fitting process as claimed in claim 2, **characterised in that** the relative movement of the pupil of the eye concerned relative to the measuring lens is monitored with a suitable monitoring device, preferably a slit lamp microscope, and/or is recorded, and or is illustrated and/or is stored with a recording device, preferably with a photo-camera and/or a video camera.

4. Fitting process as claimed in claim 2 or 3, **characterised in that** the measuring data of the pupil positions are determined for near vision and distance vision and/or the measuring data of the pupil diameters under specific light conditions are determined with respect to the surface of the measuring lens.

5. Fitting process as claimed in claim 4, **characterised in that** these measuring data are preferably determined electronically.

6. Fitting process as claimed in claim 4 or 5, **characterised in that** the pupil positions for near vision and distance vision and/or the pupil diameter under specific light conditions with respect to the surface of the measuring lens are used to set the size of the near portion and distance portion.

7. Fitting process as claimed in claim 6, **characterised in that** this setting process is carried out electronically.

8. Fitting process as claimed in any one of claims 3 to 7, **characterised in that** the pupil positions for near vision and distance vision and/or the pupil diameter under specific light conditions with respect to the surface of the measuring lens are used to determine the course of the separation line.

9. Fitting process as claimed in claim 8, **characterised in that** this determination is carried out electronically.

10. Measuring lens having a substantially spherical lens body which has a substantially convex outer surface and a substantially concave inner surface, preferably for the fitting of multi-focal contact lenses, wherein in order to determine the relative movement of a human pupil relative to the surface of the measuring lens on the surface of the measuring lens more than three concentric rings (6.1-6.5) are provided, having their middle point in the optical central point and being spaced from each other by between 0.5 mm and 2 mm.

11. Measuring lens as claimed in claim 10,
**characterised in that** the concentric rings are formed as engraving or colour inlays.

12. Use of the measuring lens as claimed in claim 10 or 11 for the fitting of multi-focal contact lenses.

## Revendications

1. Procédé d'adaptation d'une lentille de contact sur un oeil humain, selon lequel la géométrie du globe oculaire est déterminée pour définir la géométrie de la face arrière, et les corrections optiques nécessaires pour la vision de loin et la vision de près de l'oeil à corriger sont déterminées, **caractérisé en ce que** la mesure d'adaptation pour la lentille de contact à adapter est réalisée, en outre, avec des moyens permettant de mesurer le mouvement de la pupille par rapport à un système de référence sur ou à proximité de l'oeil, qui se déplace par rapport à la pupille à la suite d'un changement entre la vision de loin et la vision de près.

2. Procédé d'adaptation selon la revendication 1, **caractérisé en ce que** le système de référence est constitué d'une lentille de mesure posée sur l'oeil concerné et **en ce que**, pour déterminer le mouvement relatif de la pupille de l'oeil concerné, sur lequel la lentille de contact doit ensuite être posée, le mouvement de la pupille par rapport à la lentille de mesure ou par rapport à la surface de la lentille de mesure, est déterminé.

3. Procédé d'adaptation selon la revendication 2, **caractérisé en ce que** le mouvement relatif de la pupille de l'oeil concerné par rapport à la lentille de mesure est observé avec un dispositif d'observation approprié, de préférence un microscope à lampe à fente, et/ou photographié et/ou représenté et/ou mémorisé avec un dispositif d'enregistrement, de préférence un appareil photo et/ou une caméra vidéo.

4. Procédé d'adaptation selon la revendication 2 ou 3, **caractérisé en ce que** les données de mesure des positions de la pupille pour la vision de près et la vision de loin et/ou les données de mesure du diamètre de la pupille peuvent être déterminées par rapport à la surface de la lentille de mesure dans certaines conditions de luminosité.

5. Procédé d'adaptation selon la revendication 4, **caractérisé en ce que** ces données de mesure sont déterminées, de préférence, électroniquement.

6. Procédé d'adaptation selon la revendication 4 ou 5, **caractérisé en ce que** les positions de la pupille pour la vision de près et de loin et/ou le diamètre de la pupille dans certaines conditions de luminosité par rapport à la surface de la lentille de mesure, sont utilisées pour déterminer la taille de l'élément de vision de près et de l'élément de vision de loin.

7. Procédé d'adaptation selon la revendication 6, **caractérisé en ce que** cette détermination est réalisée électroniquement.

8. Procédé d'adaptation selon l'une des revendications 3 à 7, **caractérisé en ce que** les positions de la pupille pour la vision de près et la vision de loin et/ou le diamètre de la pupille dans certaines conditions de luminosité par rapport à la surface de la lentille de mesure sont utilisées pour déterminer le tracé de la ligne de séparation.

9. Procédé d'adaptation selon la revendication 8, **caractérisé en ce que** cette détermination est réalisée électroniquement.

10. Lentille de mesure avec un corps de lentille globalement sphérique qui présente une surface externe globalement convexe et une surface interne globalement concave, de préférence pour l'adaptation de lentilles de contact multifocales, dans laquelle sont prévus, plus de trois anneaux concentriques (6.1-6.5) sur la surface de la lentille de mesure avec un centre situé au niveau du centre optique, distants entre eux de 0,5 mm à 2 mm, pour déterminer le mouvement relatif d'une pupille humaine par rapport à la surface de la lentille de mesure.

11. Lentille de mesure selon la revendication 10, **caractérisé en ce que** les anneaux concentriques se présentent sous forme de gravures ou d'inserts colorés.

12. Utilisation de la lentille de mesure selon la revendication 10 ou 11 pour l'adaptation de lentilles de contact multifocales.
